(19) Europäisches Patentamt
European Patent Office
Office européen des brevets

(11) Numéro de publication: **0 088 693**
**A1**

(12) # DEMANDE DE BREVET EUROPEEN

(21) Numéro de dépôt: **83400457.4**

(22) Date de dépôt: **04.03.83**

(51) Int. Cl.³: **A 23 B 4/14**, A 23 L 1/31

(30) Priorité: **05.03.82 FR 8203788**

(43) Date de publication de la demande: **14.09.83**
**Bulletin 83/37**

(84) Etats contractants désignés: **AT BE CH DE FR GB IT LI LU NL SE**

(71) Demandeur: **INSTITUT NATIONAL DE LA RECHERCHE AGRONOMIQUE (INRA), 149, rue de Grenelle, F-75341 Paris Cedex 07 (FR)**

(72) Inventeur: **Staron, Thadée Joseph, Avenue du Mal Leclerc, F-28110 Luce (FR)**

(74) Mandataire: **Phélip, Bruno et al, c/o Cabinet Harlé & Phélip 21, rue de La Rochefoucauld, F-75009 Paris (FR)**

(54) **Procédé de traitement des viandes.**

(57) L'invention concerne le domaine des viandes.

Le procédé de traitement des viandes non transformées selon l'invention notamment pour maîtriser la tendreté, consiste à mettre la viande en contact avec un agent de traitement capable dans les conditions de traitement, de fournir in situ des ions $NH_4^+$ qui empêchent la vulcanisation et permettent la fragmentation musculaire lors de la cuisson ultérieure de la viande.

Application: désossage à chaud.

EP 0 088 693 A1

La présente invention concerne un procédé de traitement des viandes, notamment pour maîtriser la tendreté, contenir l'exsudation, conserver l'aspect originel et inhiber la croissance microbienne. Ce procédé est applicable aux animaux avant l'abattage; il permet aussi de pratiquer le désossage à chaud et de supprimer les temps de maturation.

Dans la présente description on désigne par "viandes" la chair des animaux dont on a coutume de se nourrir. Ce terme englobe tous les produits carnés et notamment la chair des mammifères, des oiseaux et quelquefois des poissons. De plus, le terme "viandes" tel qu'utilisé dans la présente description désigne toutes les viandes quelle que soit leur destination : viande à rôtir, viande à griller, viande à bouillir, viande à braiser, viande pour charcuterie et/ou salaison et similaires, aussi bien à l'état frais que congelé ou décongelé, provenant de toutes les espèces animales monogastriques ou polygastriques, vertébrés ou non vertébrés, telles que les bovins, les ovins, les caprins, les chevaux, les zèbres, les buffles, les volailles, les gibiers, cette liste n'étant nullement limitative.

Les viandes se caractérisent par une grande hétérogénéité. Elles sont principalement constituées de muscles striés squelettiques qui comportent aussi d'autres tissus en quantités très variables selon les espèces, les races, les âges, les régimes alimentaires, la région anatomique concernée; ce sont surtout les tissus : conjonctif, adipeux, parfois des os et de la peau. Les viandes possèdent une valeur nutritionnelle très élevée, car elles sont constituées de protéines digestes, bien équilibrées et très riches en acides aminés indispensables. Elles constituent aussi une bonne source de fer et de vitamines hydrosolubles.

Les viandes sont généralement considérées comme des denrées de première nécessité, cependant il s'agit de calories chères. En effet les rendements de la bioconversion par les animaux sont faibles et souvent altérés par divers facteurs. A titre d'exemple, on peut signaler que le bilan de la bioconversion des protéines est de 6% chez le boeuf,

9% chez l'agneau, 15% chez le porc et 31% chez le poulet. Par ailleurs les productions d'animaux et leurs transformations en viandes réclament beaucoup de main d'oeuvre et puisque les viandes sont des denrées périssables elles ne peuvent guère être traitées en dehors de la chaîne du froid, dont l'implantation est onéreuse et les coûts énergétiques ne cessent d'augmenter. Ainsi la consommation substantielle des viandes est l'apanage des pays développés, elle reflète un niveau de vie convenable, qui doit nécessairement être compensé par une production performante.

La production des viandes comporte des circuits systématiques confirmés avec des options technologiques. Les principales étapes de ces circuits, variables selon les espèces, peuvent se résumer ainsi :

1°) l'élevage, le contrôle sanitaire et le négoce des animaux,

2°) la conduite des animaux à l'abattoir (transport, stabulation repos et diète avant l'abattage, inspection sanitaire),

3°) l'abattage des animaux : sacrifice par fusillement, électrocution, égorgement; saignée en position verticale pour des raisons d'hygiène; dépouille (bovins, ovins, caprins, équidés, lapins) ou lavage, échaudage, épilage, flambage, grattage (porcins), ou échaudage, plumage (volailles); éviscération après élimination des pieds,ligature des conduits viscéraux et douchage éventuel ; fente (bovins, équidés, porcins) ; émoussage éventuel (bovins); inspection sanitaire; pesée; estampillage sanitaire avec comme circuit optionnel la stimulation électrique des carcasses et le désossage à chaud, suivis de découpes catégorielles, de conditionnement sous vide et de congélation.

4°) le refroidissement des carcasses (mise en chambre froide immédiate afin que la température des carcasses soit abaissée au plus vite à

+ 4°C(en 24 heures pour les gros animaux).

5°)le négoce des carcasses après évaluation de leurs qualités par des mesures et des estimations diverses.

6°)le stockage des carcasses à + 2°C, + 4°C, en vue de la maturation des viandes et de la conservation à court terme (généralement 3 à 15 jours).

7°)la découpe en ateliers conditionnés:découpage des carcasses en quartiers; désossage partiel ou total et parage grossier; découpe en pièces bouchères selon les catégories, ou en vue de la préparation de conserves,de charcuteries, de salaisons, du fumage, du séchage, etc....; parage des pièces entières, dégraissage, ablation des aponévroses et des tendons,bardage et ficelage éventuels;débitage, pesée et emballage en vue de la vente en libre service.

8°)la présentation à l'état et la vente aux traiteurs et aux consommateurs (vente de pièces bouchères entières pour restaurants et collectivités: découpe des morceaux exigés par les consommateurs; parage éventuel;pesée; emballage).

En plus de l'apport nutritionnel,on exige des viandes qu'elles soient tendres et succulentes. Au cours des temps, les observations qui agréaient les impressions palatales ont été empiriquement retenues et elles ont permis d'instituer progressivement des technologies compatibles avec la nutrition, l'hygiène et le plaisir.

Les muscles encore chauds sont relativement tendres mais leur saveur est fade ou agressive. Les muscles durcissent au cours du refroidissement,ils perdent leur élasticité et ils diminuent de volume par contraction des sarcomères, lorsque s'installe la rigidité cadavérique (rigor mortis), puis ils s'attendrissent progressivement et leur saveur augmente après des temps d'entreposage des carcasses,variables selon les espèces animales et les âges des animaux.On

notera que les muscles sont plus ou moins riches en tissu conjonctif d'enrobage (endomysium, perimysium, epimysium) et que leurs extrémités, lorsqu'elles accrochent des plans osseux, comportent des ligaments et des tendons en quantité parfois très importante .Les fibres conjonctives n'évoluent pas au cours de la maturation, mais elles sont assez rapidement dissoutes par la cuisson dans les viandes issues d'animaux jeunes, alors que dans les muscles d'animaux âgés, les ponts stables reliant les fibres de collagène ne sont que lentement influencés par la cuisson et, de ce fait, le collagène intervient probablement dans l'augmentation de la dureté des viandes dans lesquelles il est présent en quantité substantielle, malgré la maturation musculaire.

Après l'abattage les muscles sont chauds et extensibles (ils peuvent être reversiblement allongés de 30 à 40% au-dessus de leur longueur initiale); ils comportent des ressources énergétiques (glycogène, ATP, CP) et leur pH oscille entre 6,7 et 7,2. Progressivement, avec la chute de température, on observe une acidification musculaire plus ou moins prononcée, accompagnée de contraction avec perte d'élasticité. C'est le taux d'ATP initialement présent, dont la vitesse d'hydrolyse est catalysée par la myosine qui,influencé par la température, détermine la vitesse et le niveau de l'acidification ainsi que le degré de la contraction musculaire. Celle-ci, lorsqu'elle devient irréversible, a pour conséquence fâcheuse d'augmenter la dureté des viandes. L'activité ATP-asique de la myosine est activée par la chaleur (de + 25 à + 45°C), par le froid (au-dessous de + 10°C), par la stimulation électrique et elle est inhibée par l'acifidification (pH au-dessous de 6).

Afin de réduire la fréquence et l'ampleur des invasions microbiennes, les règlementations actuelles obligent à abaisser la température des carcasses aux environs de + 4 °C rapidement( en 24 h pour les gros animaux). Or, lorsque la température des carcasses atteint + 10°C alors que l'acidité musculaire est insuffisante (pH au-dessus de 6), la myosine activée par le froid, catalyse l'hydrolyse de l'ATP,

ce qui a pour conséquence d'actionner les muscles, qui demeurent à l'état contracté ou surcontracté quand l'ATP est totalement épuisé. On peut pallier cette difficulté en faisant une brève stimulation électrique des carcasses (fréquence des impulsions = 15 Hz; tension en crête supérieure = 600 volts; durée de la stimulation = 90 à 120 secondes pour les gros bovins). Cette action réalisée à chaud contracte réversiblement les muscles et épuise environ 50% de l'ATP. La consommation d'ATP abaisse le pH des masses musculaires d'environ 0,8 unité. Dans ces conditions d'acidité l'activité ATP-asique de la myosine va être inhibée et les molécules d'ATP résiduel qui se fixent alors sur les têtes de myosine vont les détacher des filaments fins et libérer ceux-ci. La disjonction des filaments épais et fins au sein des sarcomères, va permettre une relaxation musculaire passive.

La stimulation électrique d'une carcasse ne donne pas une réaction homogène. La réponse obtenue dépend de la répartition du champ électrique et elle varie aussi selon les muscles : leurs compositions, leurs niveaux énergétiques, le type de contraction et les fonctions qu'ils assurent, etc... . Malgré quelques aménagements qui restent à faire, le procédé de stimulation électrique des carcasses est intéressant puisque ses actions (inhibition de la contraction musculaire et accélération de la maturation des viandes) permettent d'envisager un désossage à chaud (plus rapide à réaliser et plus complet) suivi d'un parage et d'un conditionnement immédiat des masses musculaires par catégories, ayant pour effets de limiter : le nombre des manipulations,les contaminations, les pertes d'eau, les volumes des aires de stockage et permettant des entreposages maturatifs sélectifs.

La transformation des tissus concernés en viandes ( la maturation) n'étant pas instantanée, un temps d'entreposage des carcasses dans des conditions hygièniques définies, variables selon les espèces animales et l'âge des animaux, est nécessaire et pratiqué pour permettre le développement d'un certain nombre de réactions physico-chimiques indispensables. Dans la complexité réactionnelle, les modalités de l'évolution des myofibrilles au cours de la maturation jouent un rôle déterminant dans l'établissement du niveau de la tendreté des viandes (la tendreté des viandes est évaluée en termes de résistance des fibres aucisaillement), mais il faut aussi que la couleur vive des viandes conférée par l'oxymyoglobine soit conservée (il s'agit d'un critère de fraîcheur), que l'odeur soit appréciée à l'achat, plaisante pendant la cuisson et que la saveur après cuisson réponde aux exigences palatales. Ces quatre critères (couleur, odeur, tendreté, saveur) lorsqu'ils sont réunis définissent la bonne qualité des viandes.

Ainsi on constate que l'obtention d'une viande dite de bonne qualité est complexe et requiert un choix judicieux des conditions de refroidissement des carcasses et de maturation de celles-ci. En effet, les muscles après abattage sont le siège de nombreuses réactions physico-chimiques et/ou influences biologiques, qui contribuent à la qualité de la viande, mais qui sont cependant perturbées et/ou inhibées par des changements, notamment, les conditions de refroidissement et de maturation.

Le refroidissement et la maturation de la viande nécessitent l'utilisation d'aires de stockage volumineuses, dont le coût influe sur le prix de revient de la viande.

Comme indiqué ci-dessus, la stimulation électrique permet un désossage à chaud, ce qui réduit en conséquence les aires de stockage, cependant la mise en oeuvre de la stimulation électrique est dangereuse dans les atmosphères humides des abattoirs et donc pratiquement peu utilisée.

De plus, le consommateur attache une très grande valeur à la couleur des viandes et c'est à juste titre puisqu'il s'agit d'un critère de qualité directement appréciable à l'achat. En effet, la viande demeure fraîche tant qu'elle garde la capacité de régénérer son oxymyo-

globine au tranchage, ce qui se traduit par un développement à la surface de la coupe d'une couleur vive rutilante.

Il existe différents procédés de conservation de la viande (congélation, appertisation, séchage, fumigation ou fumage, irradiation, adjonction d'additifs, etc...).

La congélation est le moyen de conservation qui respecte les principales propriétés originelles des viandes fraîches et de ce fait, elle est devenue le mode de conservation prépondérant. L'inconvénient majeur de ce procédé demeure l'exsudation systématique et parfois très importante, qui se développe au cours de la décongélation. Les exsudats amènent des réductions de poids, des pertes de matières nutritives (matières sèches, minérales, acides aminés, protéines). Ils sont à l'origine des maculations et, en s'étalant, augmentent les surfaces propices aux développements microbiens.

En plus des modifications qui interviennent au cours de la transformation des muscles en viandes, des changements ont lieu lors de la cuisson de la viande.

Les viandes crues possèdent une odeur sui generis et un léger goût de sang.

Dans la majorité des cas, les viandes sont consommées cuites. De très nombreuses réactions se développent au cours des cuissons appliquées, en fonction des ingrédients ajoutés aux différentes viandes, à leurs catégories et aux morceaux concernés. La cuisson bien ou mal conduite se traduit toujours par des modifications de couleur et un développement de flaveurs, une évolution de la tendreté et du goût, une réduction plus ou moins grande des volumes des viandes.

Selon l'origine des viandes, leur dureté initiale, le mode et l'intensité des cuissons pratiquées (viandes grillées, rôties, saignantes, à point, braisées, bouillies), on obtient des plats qui donnent des sensations palatales variées.

Lorsqu'on applique une cuisson progressive aux viandes, jusqu'à + 40°C on observe peu de modifications; entre + 40 et + 55°C, le pH s'élève de 0,2 unité, les fibres diminuent de diamètre sans raccourcir, perdent une partie de leur eau libre, le réseau conjonctif se resserre, les groupement sulfhydriles et la capacité de fixer les colorants diminuent, la viande durcit; entre + 55 et + 65°C les protéines coagulent, les fibres diminuent de longueur et se fragmentent au niveau des bandes A et 1, les stries Z s'effritent puis s'effacent, la viande s'attendrit sous l'effet conjugué des dislocations et des enzymes; aux environs de 75°C; l'agrégation massive des protéines myofibrillaires, l'établissement de ponts hydrogène entre les protéines dénaturées et la perte d'eau amènent un raffermissement des viandes. Lorsqu'on allonge les temps de cuisson dans ces conditions on observe un attendrissement progressif dû à une dissolution du tissu conjonctif. Les viandes cuites longtemps présentent une texture lâche et filandreuse; elles perdent leur capacité de rétention d'eau et beaucoup de matière sèche.

Au cours de la cuisson des viandes, il y a développement de flaveurs.

Les précurseurs des flaveurs sont localisés dans les graisses et dans les muscles. Les molécules spécifiques à l'espèce semblent plutôt liées aux graisses. Environ 100 composés flavorisants appartenant à plus de 10 classes chimiques ont été identifiés.

Il y a tout d'abord les petites molécules présentes dans les muscles, auxquelles s'ajoutent celles qui sont libérées au cours de la maturation et de la cuisson. Il y a ensuite les hydrolyses, les synthèses, les transformations, les interactions moléculaires, les réactions de MAILLARD, qui se développent au cours de la cuisson et qui donnent un ensemble complexe de molécules volatiles ou non (acides gras, aldéhydes, cétones, alcools, esters, éthers, pyrazines, bases de SHIFF, composés soufrés aliphatiques et cyclisés), conférant aux viandes des flaveurs habituellement séduisantes, ou répugnantes dans les cas d'aldutérations.

L'ensemble des considérations ci-dessus montre qu'il est souhaitable de mettre au point un procédé de traitement des viandes qui satisfait le consommateur sur tous les plans et améliore les modalités de préparation de celle-ci.

On a déjà proposé différents procédés pour le traitement des viandes ou autres produits alimentaires pour assurer leur conservation et/ou éviter la formation de produits indésirables.

A cet effet, on citera les documents ci-après :

- le brevet US 3.023.109 concerne un procédé pour le traitement de la viande rouge fraîche pour stabiliser sa couleur. Ce procédé consiste à soumettre le viande fraîche à une atmosphère contenant 5 à 25% d'ammoniac pendant 10 secondes à 5 minutes. On notera que les temps de traitement préconisés sont très brefs; ils n'agissent que sur la couleur mais n'ont d'effets ni sur la tendreté ni sur l'exsudations à la décongélation. Il est même indiqué que des temps de traitement plus longs confèrent à la viande l'aspect du cuir même si l'apparence de la viande elle-même ne change pas. L'homme du métier se trouvait donc découragé à traiter la viande fraîche pendant des périodes prolongées avec un agent externe tel que l'ammoniac.

- le brevet GB 1.460.913 concerne un procédé de conservation des aliments (viande et poisson) à l'aide de polyphosphates comestibles.

- le brevet BE 360.323 concerne un procédé de traitement des comestibles, en particulier du poisson, des viandes et de la volaille pour améliorer leur qualité et empêcher certains changement indésirables qui peuvent se produire, notamment pendant la congélation ou l'emmagasinage à l'état congelé. Ce procédé consiste à traiter les comestibles de façon à augmenter leur valeur de concentration en ions hydrogène (pH) jusqu'à un degré tel que les comestibles montreront une tendance à gonfler et retiendront leur eau pendant la décongélation, même après une période d'emmagasinage prolongée. Le traitement préconisé dans ce brevet BE 360.323 est un traitement alcalin ou neutre effectué avec par exemple des sels de sodium, de potassium ou d'ammonium. Les saumures utilisées dans ce procédé peuvent de plus contenir de l'azoture de sodium en quantité suffisante pour maintenir les pigments colorants des comestibles dans leur état rosé naturel.

- Le brevet US 3.042.529 concerne également un procédé pour améliorer la viande. Ce procédé consiste à injecter aux animaux, avant ou après abattage, une composition contenant de l'acide ascorbique et des amines biogènes. Ce procédé aboutit notamment à une prévention des stress qui, chez le porc, est à l'origine des viandes dépigmentées molles et exsudatives. Les amines biogènes sont utilisées en très faible quantités, juste suffisantes pour compenser la perte en produits naturels provoquée par l'abattage et la mort.

- Les brevets DE 831.489 et NL 97.624 décrivent des procédés de conservation des viandes à base de saumures constituées d'amines, de phosphates, de sulfites, de bisulfite, de chlorure de sodium, de vitamines C et de sels d'ammonium, tels que le chlorure d'ammonium.

- Le brevet US 4.039.690 décrit un procédé pour éviter ou réduire la formation de nitrosamines cancérigènes dans les salaisons et les viandes séchées et fumées, préparées à l'aide de nitrites. Ce procédé consiste à traiter de telles viandes avec des amines primaires aromatiques.

L'art antérieur ci-dessus montre la diversité des procédés qui ont déjà été proposés pour le traitement des comestibles, en particulier de la viande, pour préserver ou améliorer la qualité de ceux-ci.

Aucun d'entre eux, cependant, ne propose des moyens pour effectuer un traitement dans la masse ("à coeur") de la viande permettant, lors de la cuisson ultérieure de celle-ci d'améliorer la tendreté. On a maintenant trouvé un nouveau procédé de traitement des viandes non transformées qui permet de maîtriser la tendreté.Le procédé de l'invention permet également de contenir l'exsudation et d'inhiber la croissance microbienne, tout en conservant l'aspect originel.

La présente invention concerne donc un procédé de traitement de la viande non transformée, notamment pour contrôler la tendreté de celle-ci, qui consiste à mettre la viande en contact avec un agent capable, dans les conditions de traitement, de fournir <u>in situ</u> des ions $NH_4^+$ qui empêchent la vulcanisation et permettent ainsi la fragmentation musculaire lors de la cuisson ultérieure de la viande.

L'agent de traitement mis en oeuvre dans le procédé de l'invention est choisi notamment parmi l'ammoniac, les amines alimentaires, les sels ou les solutions de sels alimentaires d'ammoniac ou desdites amines et les précurseurs des composés mentionnés.

Par "viande non transformée", on désigne, selon la présente invention, toute viande en l'état, à savoir une viande n'ayant subi aucun traitement provoquant un changement des caractéristiques que la viande possède après abattage. ainsi une cuisson transforme la viande alors qu'une viande congelée-décongelée est une viande non transformée selon la définition de la présente invention.

Le procédé de l'invention s'applique aussi bien à la viande elle-même qu'aux muscles vivants qui fournissent la viande après la mort de l'animal.

Ainsi par "mise en contact de la viande non transformée avec un agent de traitement" on désigne selon l'invention aussi bien une mise en contact externe, avec l'agent de traitement, une atmosphère gazeuse ou une solution contenant ledit agent, qu'une mise en contact interne que l'on réalise par injection ou ingestion de l'agent de traitement avant abattage. L'agent de traitement selon l'invention peut se présenter sous la forme de gaz ou de solutions. L'agent de traitement peut également être présenté en tant que tel ou dans un véhicule ou support inerte convenant à son transfert sur ou dans le viande.

On a en effet trouvé, que la mise en contact de la viande non transformée avec un agent de traitement, tel

que défini ci-dessus, par exemple une atmosphère ammoniacale restitue un tonus élastique à la viande et inhibe spectaculairement la durcissement par la cuisson, de la viande traitée selon l'invention. De plus le procédé de traitement selon l'invention annihile également l'exsudation.

Lorsqu'on utilise l'ammoniac comme agent de traitement de la viande selon l'invention on met la viande dans des atmosphères ammoniacales contenant avantageusement 5 à 30 $g/m^3$ d'ammoniac pendant environ 0,5 à 4 heures. La température à laquelle on opère le traitement ammoniacal varie suivant la période de la préparation de la viande à laquelle est effectuée le traitement. Par exemple si le traitement est effectué immédiatement après l'abattage, la température sera comprise entre + 4°C et + 30°C, alors que, s'il est effectué à la décongélation, la température sera comprise entre - 18°C et la température ambiante.

Dans la présente description, on désigne par "préparation de la viande" toute période de la transformation des muscles en viandes, y compris la congélation et la décongélation ou les périodes de conservation de la viande non transformée par tous autres moyens.

En fait, comme le traitement peut avoir lieu à un moment quelconque de la préparation de la viande, on opère à température à laquelle se trouve normalement la viande. Cependant, lorsque le traitement a lieu à la décongélation il est préférable d'opérer à des températures basses pour supprimer l'exsudation qui se produit lors de la décongélation.

Le traitement selon l'invention convient particulièrement bien au moment de l'abattage; il permet un

désossage à chaud sans stimulation électrique et procure tous les avantages du désossage à chaud qui sont : la rapidité, la mécanisation, la diminution de la perte de vainde, le parage plus aisé, la coloration des viandes plus uniforme; l'économie de réfrigération car le volume à réfrigérer est moindre et l'économie de main d'oeuvre. De plus on partient également à une uniformisation des morceaux de viande à rétention d'eau totale et à la suppression de la maturation.

L'ammoniac présente des caractéristiques physico-chimiques intéressantes pour la mise en oeuvre du procédé de l'invention.

La constante diélectrique à - 40°C est égale à 22 et sa grande réactivité due à une faible auto-ionisation lui confère des propriétés solvantes ionisantes pour les électrolytes. Sa constante de dissociation à + 40°C est $K = [NH_4^+] [NH_2^-] = 10^{-29}$. Il est capable de former des liaisons H intermoléculaires entre les atomes d'hydrogène d'une molécule et les atomes d'azote des molécules voisines, par exemple des protéines.

L'ammoniac gazeux est au degré minimal d'oxydation ( - 3) ce qui lui confère des propriétés réductrices, qui procurent une protection de la myoglobine responsable de la couleur rouge de la viande. Le gaz $NH_3$ se dissout aisément dans l'eau avec dégagement de chaleur ( 1176l/l à 0°C; 702 l/l à 20°C) en donnant des hydrates et non des hydroxydes (ceux-ci existent seulement à l'état dissocié $NH_4^+$ $OH^-$ , avec absence d'azéotrope). Les solutions aqueuses (bases faibles)

comportent des liaisons hydrogènes (N...........H-O) et c'est l'eau qui cède ses protons : $NH_3 + H^+ \rightleftharpoons NH_4^+ + H_2O \rightleftharpoons NH_3 + H_3O^+$ . L'ammoniac est une molécule d'une grande réactivité qui donne : (1) des réactions d'addition ($NH_3 + H_2O = NH_4OH$ ; $SH_2 + 2NH_3 = S(NH_4)_2$); (2) des réactions de dismutation ( $NH_3 + H_2O \rightleftharpoons NH_3OH_2 \rightleftharpoons NH_4^+ + OH^-$) ; (3) des réactions de substitution (R-CO-COOH + $NH_3 \longrightarrow$ R-CH ($NH_2$)-COOH + $\frac{1}{2}$ $O_2$ ); (4) des réactions de coordination (formation de coordinanats monodentés grâce à l'existance d'un doublet libre sur l'atome d'azote).

Sans vouloir se lier par une quelconque théorie, on pense qu'en fonction de la composition des compartiments de viande concernés, les propriétés de l'ammoniac s'expriment isolément ou de façon simultanée et confèrent globalement une accentuation des hydrophilies moléculaires, qui se manifestent par des rétentions d'eau, la formation de gels et de nouveaux sols, des altérations structurales et une désorganisation de l'anisotropie cellulaire.

Le traitement par l'ammoniac des muscles désossés à chaud et des viandes dures provoques une inhibition du durcissement à la cuisson accompagnée d'une extinc-

tion des flaveurs soufrées et de la sapidité.

Les composés soufrés de la viande interviennent dans le durcissement à la cuisson, et le traitement prévu par l'invention, par exemple à l'ammoniac, exerce en outre une action désulfurante.

On rappellera que le soufre est un nucléophile beaucoup plus énergique que l'oxygène; les thiols forment facilement des disulfures ($2RSH + \frac{1}{2} O_2 = RSSR + H_2O$) et des polysulfures (R.SSSS.R etc...) fragiles, qui par décomposition libèrent du soufre élémentaire; en milieu acide l'action des thiols sur les aldéhydes et les cétones donnent des thioacétals (RCH=S) et des thiocétones (RR'C=S) difficiles à étudier puisque spontanément polymérisables. Lors de la cuisson des viandes, l'action conjuguées du soufre élémentaire et de ses polymères durcit les structures musculaires.

Etant donné le grand nombre de réactions possibles et la multitude des états transitoires qui se développent lors de la cuisson de la viande, au cours de laquelle il y a dénaturation des structures protéiques, il est impossible d'indiquer avec précision les réactions qui ont lieu.

Cependant pour confirmer l'action désulfurante de l'ammoniac sur la viande, on a simulé des vulcanisations musculaires avec $CS_2$ et leurs inhibitions par $NH_3$. Le sulfure de carbone réagit sur les amines primaires, secondaires et $NH_3$ pour donner les acides dithiocarbamiques ($RNH\text{-}R' + CS_2$ RR'N-C(S)SH) aisément oxydables en disulfures de thiocarbamoyle connus sous le nom de disulfures de thuirame (RR'N-C(S)-S-S-C (S) NRR') importants catalyseurs de vulcanisation.

Les essais ci-après ont été réalisés :

(1) les muscles et viandes soumis crus à des atmosphères de $CS_2$ puis cuits, durcissent intensément ;

(2) soumis crus à des atmosphères successives de $CS_2$ et $NH_3$, puis cuits, ils demeurent tendres;

(3) soumis crus à des atmosphères successives d'$NH_3$ et $CS_2$,puis cuits, ils demeurent tendres.

Dans l'essai (1) ci-dessus il y a vulcanisation des structures pendant la cuisson et inhibition totale de celle-ci dans les essais (2) et (3) grâce au traitement à l'ammoniac.

Ainsi le traitement selon l'invention, en particulier à l'ammoniac inhibe la vulcanisation occasionnée par la cuisson. On a également trouvé qu'il stabilise la couleur des viandes, retarde l'évolution microbienne et contient l'exsudation . Il en résulte notamment une perte moindre des matières nutritives.

Le procédé de traitement des viandes peut également être mis en oeuvre avec une amine alimentaire quelconque, notamment volatile. La mise en oeuvre du procédé est semblable à celle décrite ci-dessus pour l'ammoniac. Il sera à la portée de l'homme de l'art de déterminer pour chaque amine les doses appropriées par des essais de routine, concernant notammentla tendreté de la viande, l'exsudation, qui seront décrits dans les exemples illustratifs ci-après.

Le procédé de traitement des viandes non transformées de l'invention peut également être mis en oeuvre avec des solutions de sels alimentaires d'ammonium ou d'amines. Dans ce mode de mise en oeuvre,les viandes non transformées sont mises en contact avec une solution aqueuse d'un sel alimentaire d'ammonium ou d'amine pendant environ 0,5 à 4 heures à une température qui varie en fonction du moment où le traitement est appliqué pendant la préparation des viandes.

Le traitement des viandes à l'aide d'un sel d'ammonium (acétate, citrate, chlorure, lactate, phosphate, sulfate) permet également de contenir l'exsudation.

On notera toutefois que le traitement des viandes à l'aide de sels alimentaires sous la forme de solutions aqueuses mouille les viandes et gélifie leurs surfaces, ce qui peut constituer un inconvénient lorsqu'il

est exigé que les carcasses doivent être ressuyées, mais il ne s'agit pas cependant d'une obligation dans tous les pays.

Cependant on notera que ces inconvénients peuvent être évités en injectant les solutions de l'un des sels ci-dessus avant l'abattage des animaux. L'invention concerne donc en variante la mise en contact des muscles devant servir à la préparation de la viande avec des solutions de sels alimentaires d'ammonium ou d'amines ou autres composés désulfurants par injection ou ingestion de ces solutions aux animaux avant l'abattage.

Dans ce mode de mise en oeuvre du procédé de l'invention on utilise avantageusement des solutions aqueuses de chlorure ou de citrate d'ammonium aminées à pH 7, dont les concentrations sont appropriées pour injecter en un temps bref 20 à 150 ml de solution par bête. La quantité de solution à mettre en oeuvre varie en fonction du poids de la bête. Il est préférable d'utiliser des solutions saturées en sel, sinon l'injection doit être faite par perfusion, ce qui augmente le temps de traitement.

On peut utiliser par exemple des solutions de chlorure d'ammonium contenant 8g/100 ml de $NH_4^+$. De telles solutions contiennent environ 330g/l de $NH_4Cl$, on indiquera, à titre d'exemple, que la dose à utiliser pour un bovin de 750 à 800 kg, dont la carcasse est d'environ 360kg, est de préférence de 70 à 100 ml de la solution ci-dessus.

Les solutions de citrate d'ammonium appropriées aux fins de l'invention contiennent avantageusement environ 600 g/l de citrate d'ammonium (sel sous la forme diammonique); le pH de ces solutions est ajusté à pH 7 à l'aide d'ammoniaque, le sel est alors sous la forme triammonique. Ces solutions titrent 10g/100 ml de $NH_4^+$. Les doses à utiliser pour l'injection sont en général de 50 à 80 ml par bovin.

Les solutions de citrate d'ammonium sont particulièrement avantageuses, car le citrate lui-même empêche la coagulation immédiate. Avec le procédé de traitement selon l'invention mis en oeuvre par injection de solutions de citrate d'ammonium avant l'abattage, le sang coagule seulement au bout d'environ dix minutes; il permet d'une part d'augmenter la tendreté de la viande et d'autre part d'obtenir une poudre de sang ayant une excellente qualité microbiologique.

Selon une autre variante de mise en oeuvre du procédé de l'invention, on peut coupler le procédé de traitement des viandes avec un traitement à l'aide d'un acide alimentaire, tel que l'acide citrique au pH de gélification de la viande, qui est compris entre 2,97 et 3,08. On utilise avantageusement l'acide citrique à raison de 4 g/kg de viande.

Cette variante convient particulièrement aux viandes congelées que l'on soumet à un traitement acide à l'aide d'acide citrique (4 g/kg de viande), après avoir décongelé dans des solutions salines ($NH_4$ Cl par exemple) ou des atmosphères contenant l'agent de traitement (par exemple $NH_3$ gaz à raison de 5 à 30 $g/m^3$) pendant 0,5 à 4 heures environ et à des températures de + 4°C à + 30°C.

Le traitement acide (acide citrique) occasionne une perte aqueuse et aminée de 0,5 à 2%; il décolore la viande qui devient grise mais il diminue les populations microbiennes. Ils augmentent par ailleurs la durée de conservation des denrées cuites, cependant l'acidité demeure légèrement perceptible après cuisson.

L'acide utilisé pour le traitement acide peut être mis en oeuvre dans une saumure comprenant du sel et un sucre, par exemple du saccharose.On a constaté qu'au pH de gélification de la viande (pH = 2,97 - 3,08) il se produit des phénomènes de transfert; les produits contenus dans la saumure pénètrent à l'intérieur de la viande; il se produit une fermentation lactique plus rapide qui a pour effet d'annuler les altérations qui peuvent se produire dans les saucissons.

Selon une autre variante du procédé de l'invention on combine le procédé de traitement (par exemple ammoniacal ou a vec des sels d'ammonium) avec un traitement à l'aide de diacétyle vaporisé.

Les viandes fraîches et chaudes possèdent une bonne résistance aux envahissements microbiens qui s'atténue progressivement ; comme on l'a indiqué précédemment le traitement selon l'invention, par exemple ammoniacal ou à l'aide d'un sel d'ammonium inhibe la croissance microbienne. On a trouvé que cette inhibition est renforcée par traitement des viandes après abattage à l'aide de diacétyle vaporisé à des doses allant de 0,1 à 5 °/₀₀ ( en poids ). Ce traitement au diacétyle assure une protection intéressante des surfaces des viandes.

On notera que les viandes fraîches traitées aux diacétyle acquièrent des flaveurs, qui se dissipent dans les salaisons et les produits fumés.

Ce traitement est donc particulèrement approprié pour les viandes destinées aux salaisons et au fumage.

Les avantages du procédé de l'invention vont être démontrés par les essais ci-après réalisés sur de la viande de boeuf en référence aux dessins annexés (figures 1a à 9). Les viandes de bovidés adultes, qui sont universellement appréciées sont celles dont la tendreté est la plus difficile à maîtriser. Les essais ci-après ont été réalisés sur des muscles désossés à chaud (cuisse - rumsteck de boeuf) et des viandes de première; seconde et troisième catégories, issues de carcasses ayant subi des temps de maturation à + 2°C pendant des temps variables (3 à 10 jours). Les pièces de viandes parfaitement parées (débarrassées des os, des graisses, des aponévroses et des tendons) ont été selon les besoins, directement analysées et traitées ou bien, découpées (morceaux de 0,6 à 1 kg), conditionnées et congelées à - 30°C.

On a traité ces morceaux de viande conformément au procédé de l'invention avec de l'ammoniac à raison de 5 à 30 g/$m^3$ pendant 30 minutes à 4 heures. Le procédé à été appliqué sur des viandes fraîches (juste après abattage) et des viandes rassies (3 à 10 jours à + 2°C).

Essai n° 1

On a cuit de la viande de boeuf 20 heures après abattage, et on a suivi l'évolution de la tendreté au cours de la cuisson d'une part selon la température à coeur des morceaux (figures 1a et 1b) et d'autre part selon les temps de cuisson au bain-marie bouillant (figures 2a et 2b). Dans ce cas on a effectué le traitement à l'ammociac après l'abattage et on a utilisé à titre de comparaison des viandes identiques mais non traitées à l'ammoniac.

Les résultats obtenus sont portés sur les graphiques des figures 1a, 1b et 2a-2b.

La notation de la tendreté a été effectuée selon l'échelle suivante :

9 = très tendre; 7 = tendre; 5 = assez tendre
3-4 = dur; 1-2 = très dur.

La notation a été portée en ordonnées sur chacune des figures et en abscisses sont indiquées : la température à coeur en centigrades (figures 1a et 1b) et le temps de cuisson en minutes (figures 2a et 2b).

Sur ces figures les courbes (1) sont relatives à de la viande de première catégorie (rumsteck, tranche) et les courbes (2), (3) sont relatives à de la viande de 2ème catégorie (rond de gîte) et troisième catégorie (jumeaux).

Les courbes des figures 1a et 1b, 2a et 2b montrent que la tendreté diminue considérablement en fonction de la température à coeur (figure 1a) et du temps de cuisson (figure 2a) et que le traitement à l'ammoniac permet de diminuer cette chute de la tendreté et d'obtenir des viandes ayant des degrés de tendreté maîtrisés puisque dans tous les cas la tendreté des viandes traitées avec $NH_3$ est supérieure ou égale à 5.

Essai n° 2 :

Dans cet essai on a évalué par des mesures dynamométriques l'évolution de la tendreté de viandes bovines adultes et on a comparé ces résultats avec les impressions odontologiques selon la notation indiquée dans l'essai ci-dessus.

Les comportements des 89 échantillons de muscles "Quadriceps femoris" désossés à chaud ou de façon traditionnelle, crus, traités à l'ammoniac et prélevés à différents stades de la cuisson ont été analysés.

Les expériences dynamométriques ont été effectuées avec un dynamomètre INSTROM 1122.

Caractéristiques des éprouvettes de viandes : épaisseur = 3mm, largeur = 1 pouce (25,4 mm); longueur entre les mâchoires = 30,0 mm.

L'allongement a été mesurée, la résistance à la rupture a été calculée en $kg/cm^2$ avec la formule R = F/S (R = résistance à la rupture; F = force appliquée en kg; S = section de l'éprouvette = épaisseur x largeur).

La conversion des $kg/cm^2$ peut être faite en $newton/mm^2$ ou mégapascal : $1kg/cm^2 = 9,8/100N/mm^2$ = MPA. Le travail ( T ) peut être calculé par la formule : T = F.A/S (A = allongement en cm). La surface des pics enregistrés, est proportionnelle au travail fourni.

Les résultats sont portés sur les figures 3a et 3b sur lesquelles sont indiqués en abscisses les températures de cuisson en degrés centigrades et en ordonnées la résistance à la traction en $kg/cm^2$, la vitesse de traction étant de 5 cm/min (figure 3a) et de 1 cm/min (figure 3b) et la notation de la tendreté (figure 3b).

Les différentes courbes des figures 3a et 3b sont relatives respectivement à :

(1) tranche de boeuf désossée à chaud, non rassie, non traitée,

(2) tranche de boeuf désossée à chaud, non rassie, traitée ($NH_3$)

(3) tranche de boeuf désossée après 4 jours de maturation à + 2°C et traitée ($NH_3$)

(4) tranche de boeuf désossée après 4 jours à + 2°C et traitée ($NH_3$)

(5) tranche de boeuf désossée après 4 jours de maturation à + 2°C et traitée (acide citrique)

(6) appréciation gustative de la tendreté des échantillons (2), (4), (5).

Les résultats des figures 3a et 3b montrent qu'il existe une correspondance remarquable entre les deux méthodes d'évaluation de la tendreté, la notation

gustative étant plus sévère à l'égard de quelques échantillons.

On a réalisé les mêmes essais en utilisant de la viande provenant des muscles d'animaux ayant été traités avant abattage soit par une solution de chlorure d'ammonium à 330 g/l, soit par une solution de citrate d'ammonium à 600 g/l. On a ainsi traité deux cents bovins avant abattage. A la cuisson de la viande obtenue à partir de ces animaux ainsi traités on a obtenu des résultats analogues à ceux mentionnés ci-dessus.

Essai n° 3

On a réalisé les titrages électrométriques des exsudats de décongélation de viandes rassies et de viandes chaudes à l'aide d'acide chlorhydrique 0,1N et d'hydroxyde de sodium 0,1N. Les titrages ont été effectués sur 2 ml d'exsudats de décongélation.

On a également étudié les comportements électrométriques des extraits KCl 0,5 M pH = 7 des muscles chauds et de viandes rassies, traités ou non à l'ammoniac. Les titrages ont été réalisés sur 2 ml d'extrait KCl 0,5 M pH = 7.

Les résultats obtenus sont portés sur les figures 4 et 5 sur lesquelles le pH est indiqué en ordonnées et les quantités d'HCl et NaOH en abscisses.

La figure 4 donne les courbes de titrages électrométriques d'exsudats de décongélation de viande de boeuf; les courbes de cette figure sont relatives respectivement :

Courbes (1) :

tranches désossées à chaud et congelées 6 heures après désossage.

Courbe (2) :

tranches rassies (3 à 10 jours à + 2°C) puis congelées.

La figure 5 représente les courbes de

titrages électrométriques d'extraits KCl 0,5M pH = 7,0 de trenches de boeuf; les courbes de cette figure sont relatives respectivement :

Courbe (1) :

tranches chaudes et rassies témoins

Courbe (2) :

tranches chaudes et rassies traitées ($NH_3$)

Les titrages ci-dessus des exsudats de décongélation montrent que les jus qui sourdent de viandes rassies sont mieux tamponnés que ceux de viandes chaudes. Dans les deux cas on observe une gélification franche et massive à pH 3 et une densification viscosimétrique au-dessus de pH = 8,6. Par contre les comportements électrométriques des extraits KCl 0,5 M pH 7 des muscles chauds et de viandes rassies sont identiques et influencés d'une manière analogue par le traitement à l'ammoniac.

Essais n° 4 :

On a étudié la variation des pourcentages moyens de pertes spontanées de poids par exsudation au cours de la décongélation à + 4°C en fonction du pH périphérique (de 2,5 à 5) ou central et périphérique (de 5 à 8,5) de pièces de viandes soumises aux différents procédés de l'invention.

Les résultats obtenus sont portés sur la figure 6 sur laquelle en ordonnées est indiqué le poids exsudé en pourcentage du poids frais initial et en abscisses le pH de la viande.

Les chiffres romains I à V portés sous les abscisses sont relatifs aux viandes ayant subi les traitements ci-après :

I - viandes traitées par des saumures acides (acide citrique), puis congelées,

II - viandes fraîches de toutes catégories, congelées,

III - viandes fraîches de troisième catégorie congelées,

IV - viandes fraîches congelées et traitées à la décongélation ($NH_3$)

V - viandes fraîches congelées et traitées à la décongélation ($NH_3$).

Les résultats portés sur la figure 6 montrent que l'exsudation peut être contenue par traitement de la viande avec des saumures contenant de l'acide citrique ou par traitement à l'ammoniac.

Par ailleurs, on a déterminé la composition centésimale des exsudats de décongélation de viande de boeuf de première catégorie, congelées chaudes et rassies. Les résultats obtenus sont consignés dans le tableau I ci-après. On a également déterminé la composition centésimale des viandes de boeuf de première catégorie et les extraits de celles-ci par KCl 0,5 M pH = 7 (100 ml/20g) et on a déterminé les quantités de matières sèches et de protéines solubilisées. Les résultats obtenues sont consignés dans le tableau II ci-après.

Par ailleurs on a analysé les précipités obtenus à différentes concentrations de $(NH_4)_2SO$ à partir d'exsudats de décongélation et d'extraits de viandes de première catégorie rassie ou chaude et traitée ou non à l'ammoniac.

Les résultats obtenus sont consignés dans le tableau III ci-après. Ils montrent, ainsi que ceux des tableaux I et II, que le traitement à l'ammoniac influence peu les exsudats.

Il découle des expériences faites à cette occasion que les exsudats des muscles désossés à chaud sont plus volumineux, plus riches en matières sèches et en protéines, d'un poids moléculaire plus élevé; la taille des protéines d'exsudats issus de viandes rassies a été réduite par les actions enzymatiques (facteurs $Ca^{++}$, cathépsines, etc....). L'extraction des protéines musculaires par des méthodes douces (KCl, 0,5M) concerne principalement les protéines sarcoplasmiques solubles, qui constituent environ 30% des protéines musculaires totales. Les taux d'extraction et les compositions sont peu influencés par la maturation et les traitements, seules certaines propriétés physicochimiques distinguent les muscles des viandes. Les compositions des jus de cuisson, qu'ils proviennent des muscles ou de viandes, diffèrent peu.

Le comportement invariable de la plupart des blocs solubles étudiés montre que le changement fondamental de la transformation des muscles en viandes s'opère nécessairement dans le compartiment organisé, c'est-à-dire au niveau des fibres, ce qui a été confirmé par les observations faites au microscope photonique.

Essai n° 5 :

On a étudié l'évolution des populations microbiennes en fonction des taux de pollution initiale et des traitements appliqués d'une part sur des viandes de boeuf congelées puis décongelées et stockées à + 4°C et d'autre part sur des viandes de boeuf crues et cuites, stockées à + 4°C.

Les figures 7a et 7b sont relatives aux viandes de boeuf congelées puis décongelées et stockées à + 4°C; les courbes de ces figures (nombre de jours en abscisses et populations microbiennes en ordonnées) sont relatives respectivement à : courbes (1) et (3) : témoins, viandes n'ayant subi aucun traitement selonl'invention.

courbes (2) et (4) : viandes traitées à l'ammoniac avant congélation (figure 7a)

courbes (5) et (6) : viandes traitées avec une saumure à base d'acide citrique (4 g/kg) (figure 7b).

Les figures 8a et 8b sont relatives aux viandes de boeuf crues et cuites et stockées à = 4°C.

La figure 8a concerne les viandes cuites, la courbe (1) étant relative à de la viande témoin cuite et la courbe (2) à de la viande saumurée cuite (acide citrique).

Sur la figure 8b, les différentes courbes sont relatives respectivement à :

courbes (1) et (2) : viande témoin crue

courbe (3) : viande crue traitée au diacétyle à 0,5 °/₀₀

courbe (4) : viande crue traitée au diacétyle à 2,0 °/₀₀

courbe (5) : viande crue traitée au diacétyle à 5 °/₀₀

Les résultats de cet essai montrent que le traitement à l'acide citrique (saumurage) diminue d'abord puis ralenti ensuiteles développements microbiens. Cette action subsiste après la cuisson.

Les viandes chaudes et fraîches possèdent une bonne résistance aux envahissements microbiens qui s'atténue progressivement; Les traitements ammoniacal, au diacétyle

ainsi qu'à l'acide citrique diminuent la croissance microbienne.

Essai n° 6 :

On a déterminé les courbes de montée en température à coeur de pièces de viandes de 600 à 1000 g cuites dans trois parties d'eau bouillante. Dans cet essai on a utilisé des viandes fraîches, des viandes rassies (maturation) et des viandes traitées à l'ammoniac après abattage.

Les résultats obtenus sont consignés sur le graphique de la figure 9 sur lequel on a porté en ordonnées la température enregistrée au coeur de la pièce de viande en degrés centigrades et en abscisses le temps de cuisson en minutes. La courbe (1) est relative à la viande fraîche tandis que la courbe (2) est relative à la viande rassie et à la viande traitée à l'ammoniac.

Cet essai montre qu'avec le traitement à l'ammoniac on obtient instantanément ce que l'on met environ 14 Jours à obtenir de façon traditionnelle par maturation . Cet essai met donc en évidence le fait que le traitement à l'ammoniac permet de supprimer la maturation.

TABLEAU I

Composition centésimale des exsudats de décongélation de viandes de boeuf de première catégorie, congelées chaudes et rassies.

| % | Viandes chaudes | Viandes rassies |
|---|---|---|
| M.S. | 14,0 | 12,0 |
| Nt M.S. | 12,4 | 11,2 |
| NnD/Nt | 80,4 | 68,7 |
| N.TCA ↓ /Nt | 90,0 | 81,1 |
| Cendres | 9,0 | 9,2 |

Légende

M.S. = matière sèche

Nt = azote total .

NnD = azote non dialysable

NTCA↓ = azote précipitable par l'acide trichloracétique

Traitement = $NH_3$

**TABLEAU II**

**Composition centésimale des viandes de boeuf de première catégorie; Extraction de celles-ci par KCl 0,5 M pH = 7(100 ml/20g) et bilans des extractions**

| % | Composition moyenne des échantillons | | Quantités de matière sèche et de protéines solubilisées, en % | | | |
|---|---|---|---|---|---|---|
| | | | Viandes chaudes | | Viandes rassies | |
| | Viandes chaudes | Viandes rassies | Témoin | Traitée | Témoin | Traitée |
| M.S. | 25,5 | 25,0 | | | | |
| M.S. extraite % de la M.S. totale | | | 31,0 | 27,0 | 33,5 | 26,5 |
| Protéines/M.S. | 80,5 | 81,0 | | | | |
| Protéines extraites % des protéines totales | | | 35,0 | 36,0 | 35,5 | 37,0 |
| NnD/Nt | | | 94,9 | 66,2 | 87,3 | 95,9 |
| NTCA ↓ /NT | | | 86,6 | 72,0 | 72,7 | 75,7 |
| Cendres/M.S. | 4,5 | 4,1 | | | | |

Légende:

M.S. = matière sèche

Nt = azote total

NnD = azote non dialysable

NICA ↓ = azote précipitable par l'acide trichloracétique

Traitement = $NH_3$

## TABLEAU III

RESULTATS DES FRACTIONNEMENTS PAR LE $SO_4(NH_4)_2$ D'EXSUDATS DE DECONGELATION ET D'EXTRAITS DE VIANDES DE BOEUF DE PREMIERE CATEGORIE

| Précipités obtenus à différentes concentrations de $SO_4(NH_4)_2$ ajouté à l'exudat (P/V), % | Exsudats de décongélation (aliquotes de 30 ml) | | | | | | | | Extraits KCl 0,5 M. pH = 7 (100 ml/20g), d'échantillons de viandes (aliquotes de 20 ml) | | | | | | | | | | | | | | | |
|---|---|---|---|---|---|---|---|---|---|---|---|---|---|---|---|---|---|---|---|---|---|---|---|---|
| | Rétentats de dialyse (ml) | | Azote total des rétentats | | | | N des fractions en % de l'N total nD | | Rétentats de dialyse (ml) | | | | Azote total des rétentats | | | | | | | | | | | |
| | | | mg/ml | | mg | | | | | | | | mg/ml | | | | mg | | | | Azote des fractions en % de l'N total nD | | | |
| | | | | | | | | | Viande chaude | | Viande rassie | | Viande chaude | | Viande rassie | | Viande chaude | | Viande rassie | | Viande chaude | | Viande rassie | |
| | Viande chaude | Viande rassie | Viande chaude | Viande rassie | Viande chaude | Viande rassie | Viande chaude | Viande rassie | Témoin | Traitée | Témoin | Traitée | Témoin | Traitée | Témoin | Traitée | Témoin | Traitée | Témoin | Traitée | Témoin | Traitée | Témoin | Traitée |
| 30 | 43,8 | 21,5 | 5,5 | 5,7 | 241,0 | 122,5 | 48,3 | 38,8 | 10,5 | | | | 2,2 | | | | 23,1 | | | | 58,7 | | | |
| 35 | | | | | | | | | | 10,5 | 10,5 | 13,5 | | 1,8 | 2,1 | 2,7 | | 18,9 | 22,05 | 36,45 | | 65,7 | 74,2 | 81,7 |
| 40 | 32,0 | 21,5 | 4,2 | 4,8 | 134,0 | 103,0 | 39,5 | 42,0 | | | | | | | | | | | | | | | | |
| 50 | 19,0 | 12,5 | 2,1 | 2,3 | 40,0 | 29,0 | 11,4 | 11,5 | | | | | | | | | | | | | | | | |
| 55 | | | | | | | | | 11,0 | | | | 1,47 | | | | 16,17 | | | | 41,3 | | | |
| 60 | 10,5 | 13,0 | 0,23 | 1,2 | 2,4 | 15,6 | 0,7 | 6,1 | | | | | | | | | | | | | | | | |
| 65 | | 10,0 | | 0,4 | | 4,0 | | 1,6 | | 13,5 | 13,0 | 15,0 | | 0,73 | 0,6 | 0,6 | | 9,85 | 7,8 | 9,0 | | 34,3 | 25,8 | 18,3 |
| Totaux | 105,3 | 78,5 | | | 417,4 | 275,1 | | | 21,5 | 24,0 | 23,5 | 28,5 | | | | | 39,27 | 28,75 | 29,85 | 45,45 | | | | |

## REVENDICATIONS

1. Procédé de traitement de la viande non transformée, notamment pour contrôler la tendreté de celle-ci, caractérisé en ce qu'on met la viande en contact avec un agent capable, dans des conditions de traitement de fournir in situ des ions $NH_4^+$ qui empêchent la vulcanisation et permettent ainsi la fragmentation musculaire lors de la cuisson ultérieure de la viande.

2. Procédé selon la revendication 1, caractérisé en ce que l'agent de traitement est choisi parmi l'ammoniac, les amines alimentaires, les sels alimentaires d'ammonium ou desdites amines et leurs solutions et les précurseurs desdits composés.

3. Procédé selon l'une des revendications 1 ou 2, caractérisé en ce que la mise en contact est réalisée de façon externe avec l'agent de traitement, une atmosphère gazeuse ou une solution contenant ledit agent de traitement.

4. Procédé selon la revendication 1, caractérisé en ce que l'agent de traitement est l'ammoniac en particulier sous forme de gaz.

5. Procédé selon la revendication 4, caractérisé en ce que l'ammoniac est utilisé à raison de 5 à 30 g/m$^3$ et en ce que le temps de traitement a lieu pendant 30 minutes à 4 heures.

6. Procédé selon la revendication 1 caractérisé en ce que la mise en contact est une mise en contact interne, réalisée par injection ou ingestion dudit agent de traitement aux animaux avant l'abattage.

7. Procédé selon l'une quelconque des revendications 1 à 6, caractérisé en ce que l'agent de traitement est un sel d'ammonium choisi parmi l'acétate, le chlorure, le citrate, le lactate, le phosphate et le sulfate d'ammonium.

8. Procédé selon l'une quelconque des revendications 1, 6 et 7, caractérisé en ce qu'on utilise des

solutions aqueuses de chlorure d'ammonium, par exemple à 330 g/l.

9.Procédé selon l'une quelconque des revendications 1, 6 et 7, caractérisé en ce qu'on utilise des solutions aqueuses de citrate d'ammonium par exemple à -o0 g/l environ.

10. Procédé selon l'une quelconque des revendications 1 à 9, caractérisé en ce que l'agent de traitement est présenté en tant que tel ou dans un véhicule ou support inerte convenant à son transfert sur ou dans la viande.

11. Procédé selon l'une quelconque des revendications 1 à 10, caractérisé en ce que l'on traite en outre les viandes avec un acide alimentaire, tel que l'acide citrique.

12. Procédé selon la revendication 11, caractérisé en ce que le traitement à l'aide d'acide citrique a lieu après avoir décongelé la viande dans des solutions salines ou des atmosphères contenant ledit agent de traitement.

13. Procédé selon la revendication 12, caractérisé en ce que l'acide citrique est utilisé, dans une saumure contenant un sucre et un sel, à raison d'environ 4g par kg de viande.

14. Procédé selonl'une quelconque des revendications 1 à 13, caractérisé en ce que l'on traite en outre la viande avec du diacétyle vaporisé.

15. Procédé selon la revendication 14, caractérisé en ce que le diacétyle est utilisé à des doses comprises entre 0,1 °/₀₀ et 5 °/₀₀ (en poids).

16. Application du procédé selon la revendication 1, dans la technique du désossage à chaud.

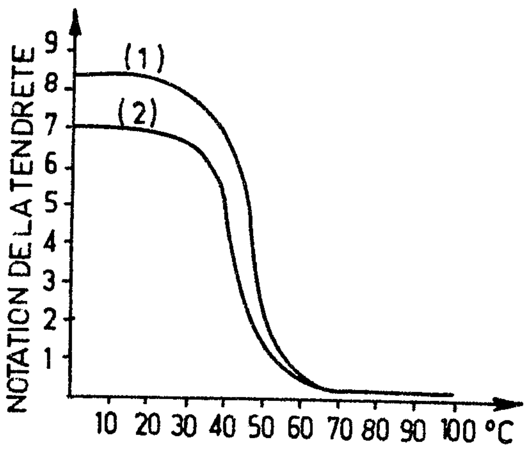


FIG.1a

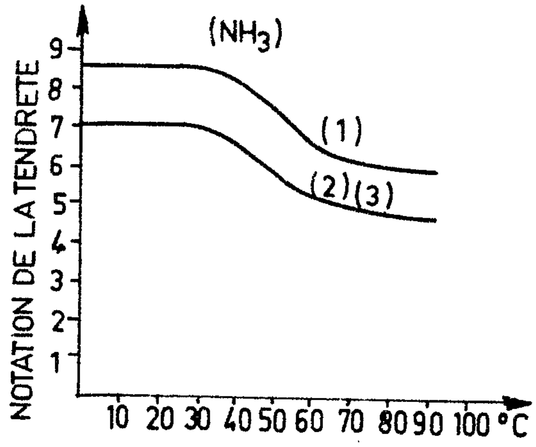


FIG.1b

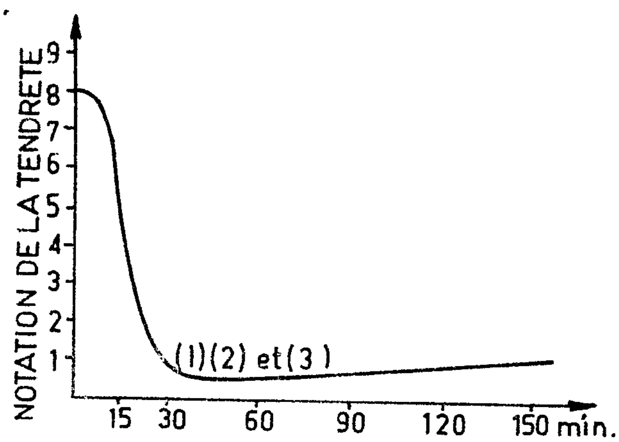


FIG.2a

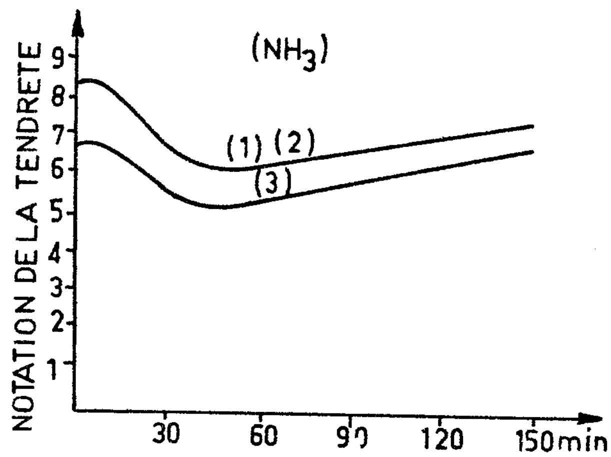


FIG.2b

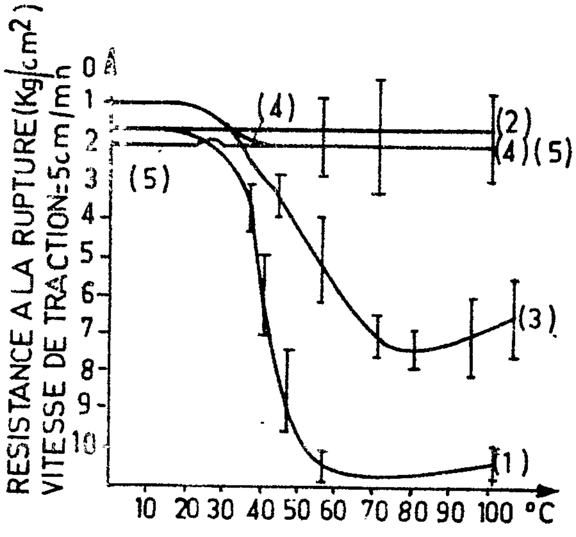


FIG.3a

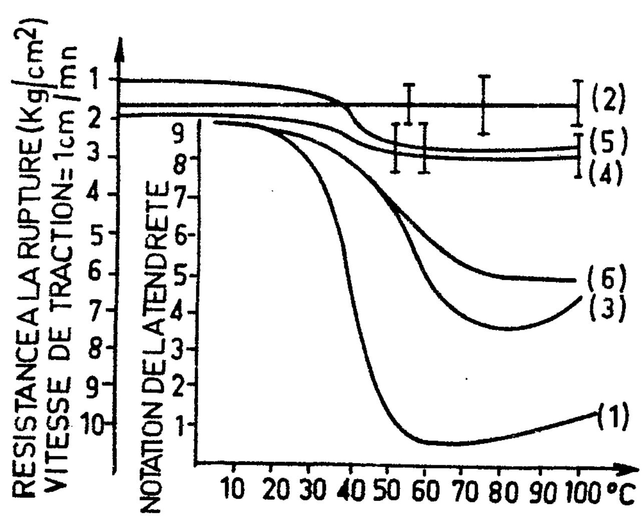


FIG.3b

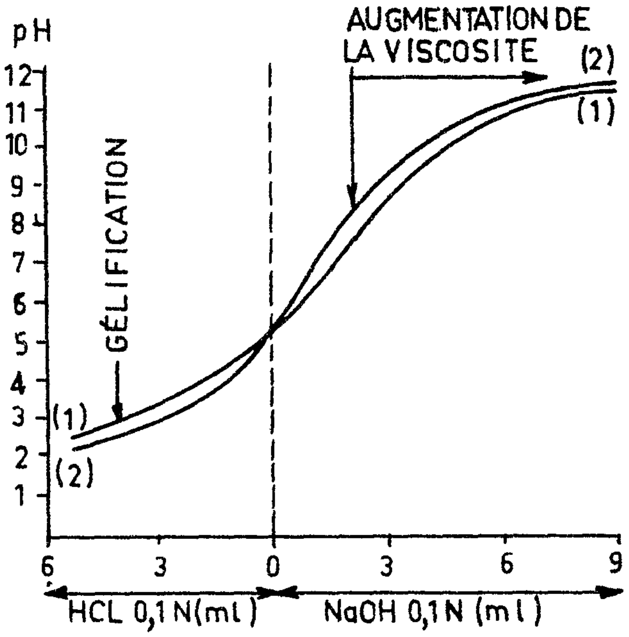


FIG.4

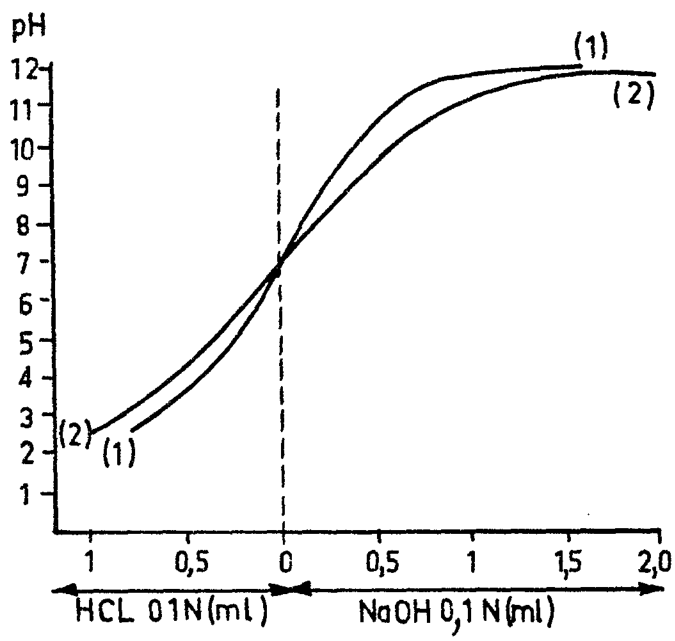


FIG.5

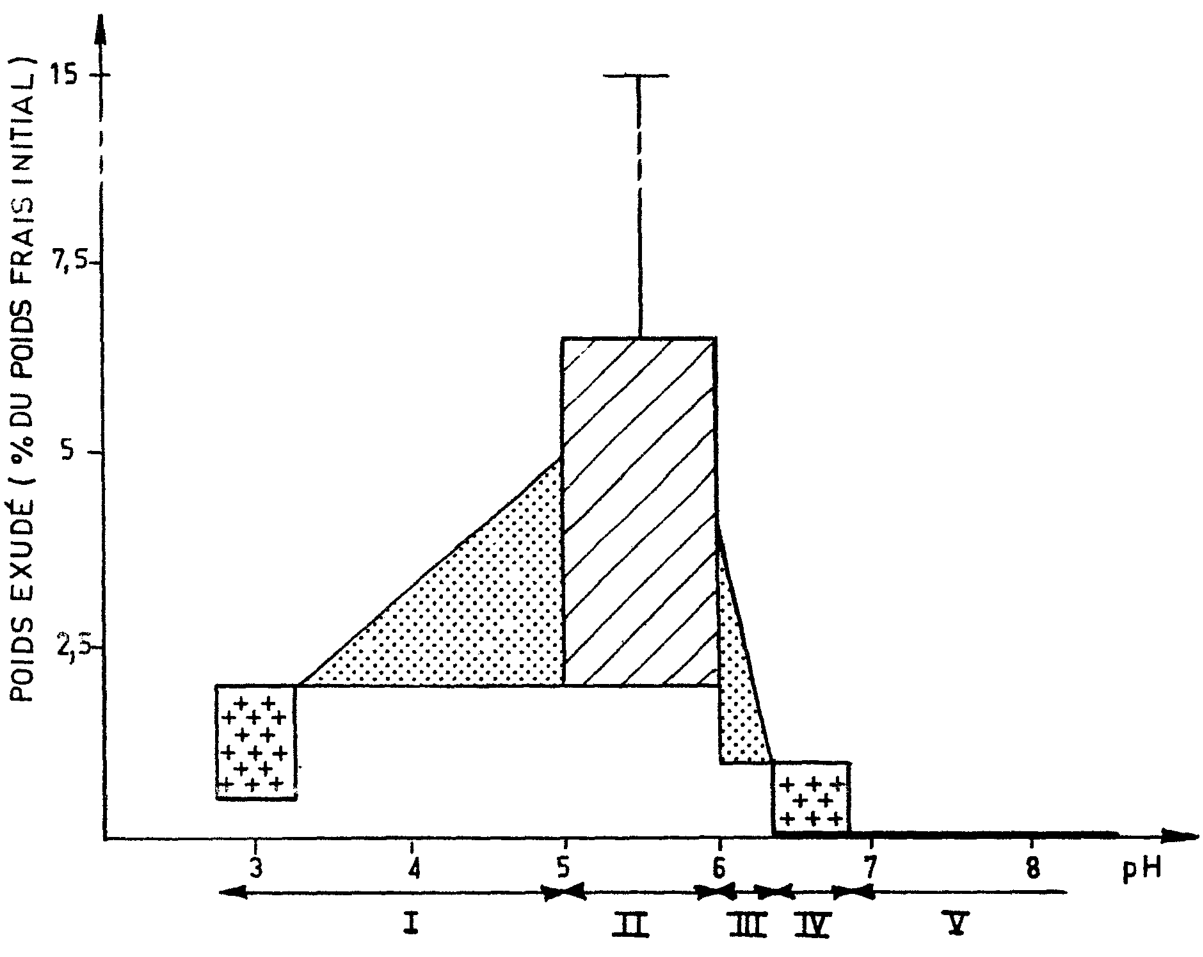


FIG.6

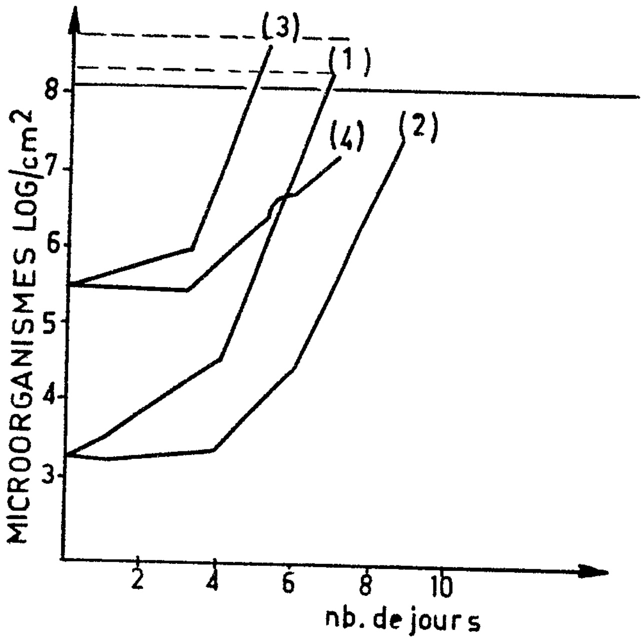


FIG.7a

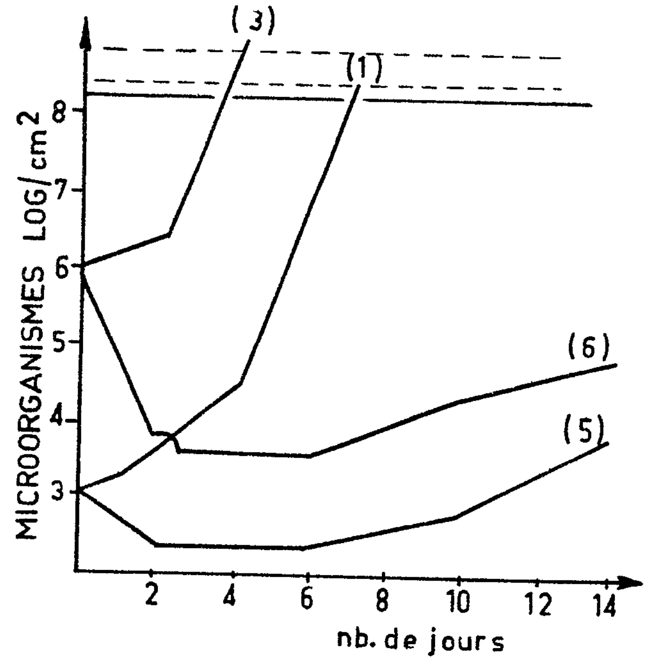


FIG.7b

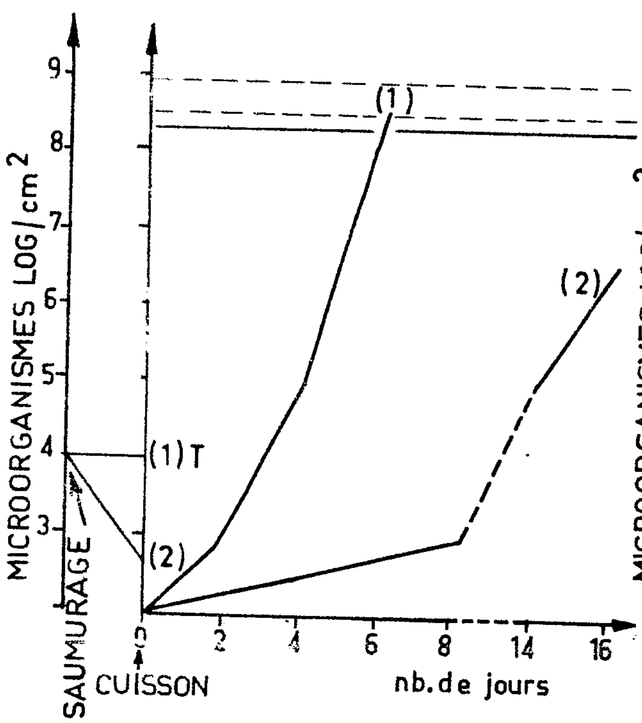


FIG.8a

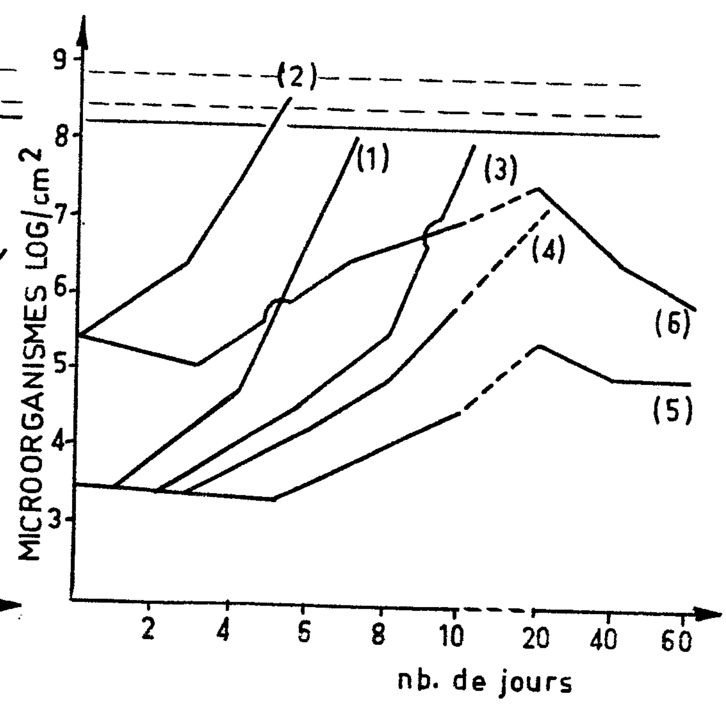


FIG.8b

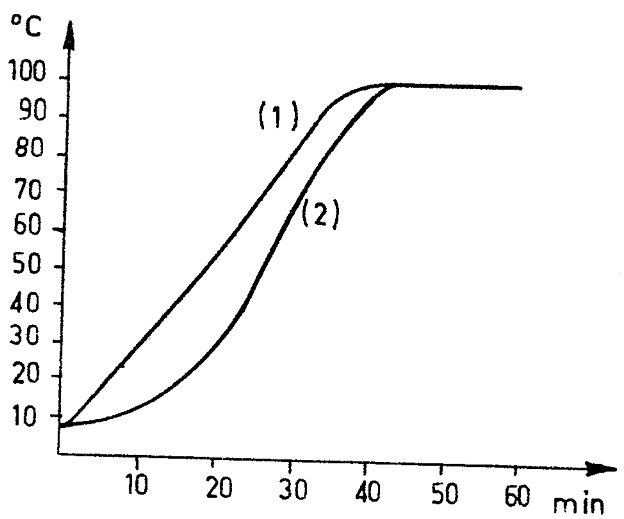


FIG.9

0088693

Office européen des brevets

**RAPPORT DE RECHERCHE EUROPEENNE**

Numéro de la demande

EP 83 40 0457

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. 3) |
|---|---|---|---|
| D,X | US-A-3 023 109 (L.HINES) *Revendication 1; colonne 2, lignes 4-6* | 1-4,10 | A 23 B 4/14<br>A 23 L 1/31 |
| D,X | FR-A-2 208 611 (ALBRIGHT & WILSON) *Revendication 1; exemple 2(c)* | 1,2,6, 10 | |
| D,X | BE-A- 360 323 (ATLANTIC COAST FISHERIES) *Revendications 1,4,5* | 1,2,3, 7,9,10 | |
| D,X | US-A-4 039 690 (H.BHARUCHA) *Revendications 1-20; colonne 1, ligne 60 - colonne 2, ligne 3* | 1-3 | |
| D,X | NL-C- 97 624 (FIJNE VLEESWAREN & CONSERVENFABRIEKEN VAN A.HUNI NK) *Revendication 1; exemple* | 1-3,7 | **DOMAINES TECHNIQUES RECHERCHES (Int. Cl. 3)** |
| A | T.E.FURIA et al.: "Fenaroli's handbook of flavor ingredients", 1971, The chemical rubber co., page 357, Cleveland Ohio USA; *Page 357, colonnes 1,2* | 14-15 | A 23 B<br>A 23 L<br>A 23 P |

Le présent rapport de recherche a été établi pour toutes les revendications

| Lieu de la recherche | Date d'achèvement de la recherche | Examinateur |
|---|---|---|
| LA HAYE | 10-06-1983 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant